# EUROPEAN PATENT APPLICATION

(11) **EP 1 146 681 A2**
(43) Date of publication of application: **17.10.2001**
(21) Application number: 01302507.7
(22) Date of filing: 19.03.2001
(51) Int. Cl.: H04J 14/02

(54) **Apparatus for demultiplexing/multiplexing optical signals modulated with different data rates in WDM systems**

(30) Priority: 31.03.2000 US 539953
(71) Applicant: LUCENT TECHNOLOGIES INC., Murray Hill, New Jersey 07974-0636 (US)
(72) Inventor: Lin, Wenhua, Middletown, New Jersey 07748 (US); Liou, Kang-Yih, Holmdel, New Jersey 07733 (US); McKay, Bradley A., Fair Haven, New Jersey 07704 (US); Spector, Magaly, Holmdel, New Jersey 07733 (US)
(74) Representative: Watts, Christopher Malcolm Kelway, Dr.

(57) **Abstract**

A facility is provided to enhance the simultaneous transmission of optical signals of different data rates, for example, OC48 and OC192 signals.
Specifically, a first stream of channels carrying signals of different data rates and a second stream of channels carrying signals each having the same data rate are supplied to respective inputs of an asymmetric wavelength combiner, which interleaves the streams at an output for transmission over an optical path. Advantageously the combiner inherently reshapes the signals that it processes, which makes it ideally suited to offset cladding mode problems encountered when demultiplexing and multiplexing the signal streams.

## Description

### Field of the invention:

The invention relates generally to optical systems, and more particularly relates to multiplexing and demultiplexing optical signals modulated with different data rates.

### Background of the Invention:

In Wavelength Division Multiplexed (WDM) optical systems, optical signals of different wavelengths (channels), λᵢ, may be modulated with different data rates, e.g., OC48 and OC192 data rates. However, more bandwidth needs to be allocated to the optical signals modulated at the higher data rates than the optical signals modulated at the lower data rates to meet spacing requirements to prevent so-called cross-talk from occurring between adjacent optical channels. For example, for effective transmission, OC192 signals may require a spacing of 100 GHz and OC48 signals may require a spacing of 50 GHz.

Such mixing of data rates increases not only the complexity but also the cost of filter circuits forming a multiplexer or demultiplexer apparatus, since each such filter has to be designed not only to process a respective bandwidth, but also a particular data rate.

Non-linearities due to, for example, cross- and self-phase modulation, will broaden the optical spectrum of optical signals as they are transported over an optical transmission path. Such broadening typically causes an optical signal to "chirp", and is more severe at the higher bit rates than lower bit rates. Consequently, an optical filter is typically designed to pass an optical signal that is two and a half times the data rate of a respective target signal to capture data signals that may be affected by such broadening, which further increases the complexity of the filter.

### Summary of the Invention:

The art of mixing different data rates in an optical transmission system without incurring the aforementioned penalties is advanced, in accordance with the principles of the invention, by using apparatus having a virtually square response which interleaves signals of different data rates supplied to respective inputs, in which the signals of the higher data rate occupy a first position within the interleaved pattern and the signals of the lower data rate occupy a second position within the interleaved pattern, or vice-versa.

Specifically, such apparatus includes asymmetric wavelength processing apparatus for receiving a first series of optical channels at an input, for receiving a second series of optical channels at another input, and for interleaving the first series of optical channels with the second series of optical channels at an output for transmission over an optical transmission path. Moreover, in accordance with an aspect of the invention, individual ones of the first series of optical channels each carry a respective optical signal of a first data rate and other individual ones of the first series of optical channels may each carry a respective optical signal of a second data rate, and wherein each of the second series of optical channels each carry a respective optical signal of the second data rate. Advantageously, then, signals of the first and second data rates may be mixed at one of the inputs to the asymmetric wavelength processing apparatus.

These an other aspects of the invention will be more appreciated from the following detailed description and accompanying drawings.

### Description of the Drawings:

In the drawing:
FIG. 1 is a broad block diagram of an illustrative optical transmission system in which the principles of the invention may be practiced;
FIG. 2. illustrates the way in which the asymmetric wavelength combiner of FIG. 1 interleaves at an output the signals that it receives at its respective inputs;
FIG. 3 illustrates the way in which the asymmetric wavelength splitter FIG. 1 deinterleaves the interleaved signal that it receives at its input;
FIG. 4. is useful for discussing the operation of an asymmetric wavelength combiner/splitter;
FIG. 5 is a broad block diagram of an optical transmission system having so-called add/drop nodes; and
FIG. 6 is a broad block diagram of an add/drop node arranged in accordance with the principles of the invention.

### Detailed Description:

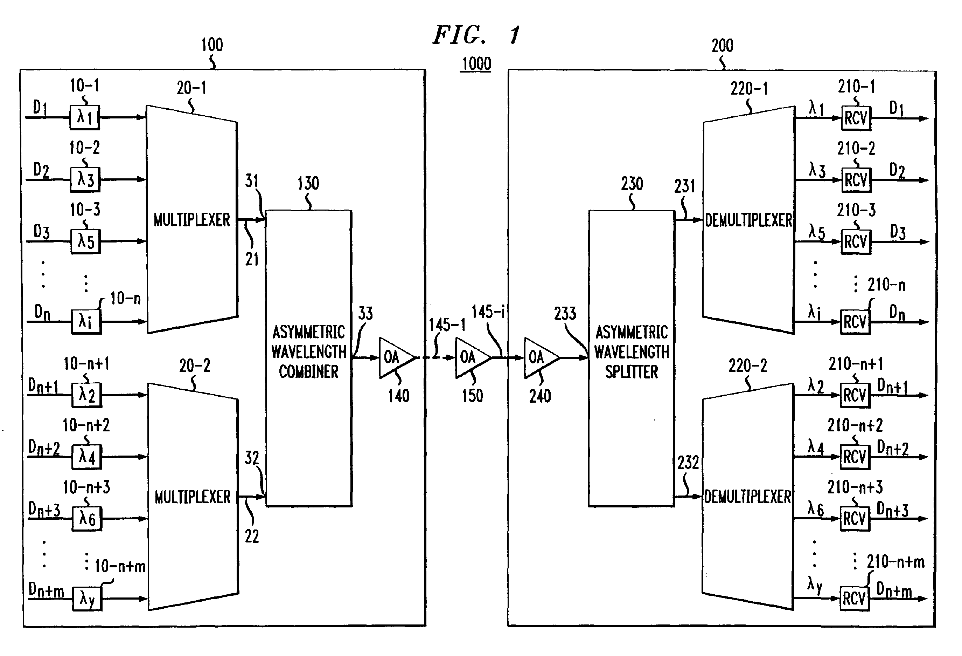

In an illustrative optical transmission system 1000, FIG. 1, conventional optical modulators 10-1 through 10-n+m at node 100 modulate data signals D₁ through Dₙ₊ₘ with respective optical carrier signals each having a unique wavelength, λₖ, and one of a plurality of different data rates. In an illustrative embodiment of the invention, such data rates may be, e.g., OC48 and OC192 signals. For the sake of design simplicity, optical carrier signals λ₁ through λᵢ, may be set to either the higher or lower data rate, whereas optical carrier signals λ₂ through λ_{y} may be set to only the lower data rate. Also, for optimum performance, the spacing between optical carrier signals λ₁ through λᵢ may be about, e.g., 100 GHz. Optical carrier signals λ₂ through λ_{y} may be similarly spaced. In accordance with an aspect of the invention, optical carrier signals λ₁ through λᵢ (λ₂ through λ_{y}) are assigned the odd (even) bandwidth positions within the optical transmission spectrum, where i and y may be, for example, 79 and 80, respectively. (Note that optical carrier signals λ₁ through λᵢ and λ₂ through λ_{y} will also be referred to herein as "optical channels" or just "channels".)

Multiplexer 20-1, which may a conventional wavelength division multiplexer, such as a so-called Dragone router, multiplexes the modulated optical signals λ₁ through λᵢ, in turn, to output path 21 extending to a first input port 31 of Asymmetric Wavelength Combiner (AWC) 130. Similarly, multiplexer 20-2, which may also be a so-called Dragone router, multiplexes the modulated optical signals λ₂ through λ_{y}, in turn, to output path 22 extending to a second input port 32 of AWC 130.

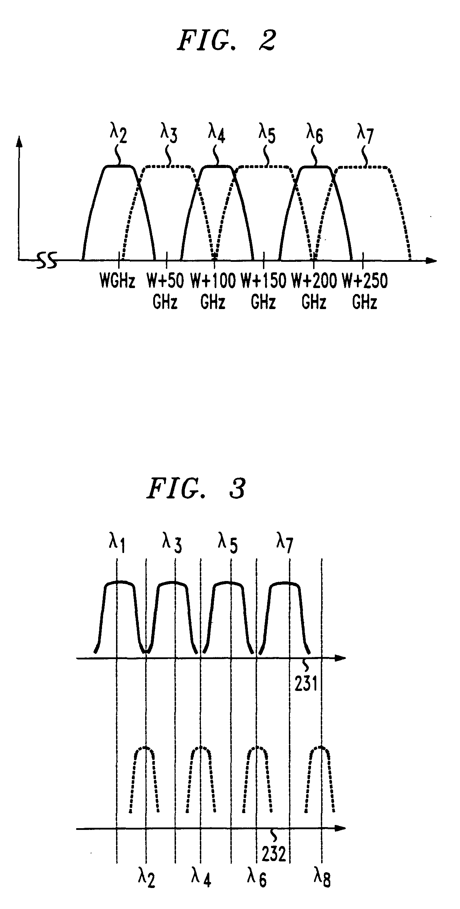

AWC 130, FIG. 1, which will be discussed in detail below, combines two groups of Z/2 optical channels spaced at X GHz from one another and received via input ports 31 and 32, respectively, and outputs the result to path 33 as a series of Z interleaved channels spaced at X/2 GHz from one another. The optical channels received via port 31 (32) occupy the odd (even) positions in the series of outputted channels. An example of such interleaving is illustrated in FIG. 2. Thus, in accordance with an aspect of the invention AWC 130, interleaves the channels that it receives via input ports 31 and 32 and outputs the interleaved result to path 33 extending to an input of optical amplifier 140. Optical amplifier 140 in a conventional manner amplifies the optical signals that it receives and outputs the amplified result to optical transmission path 145. Path 145 may be composed of a number links interconnecting a number of optical transmission nodes disposed along path 145, as represented by the dashed line and optical amplifier 150. At least one of the nodes disposed along path 145 may be arranged to implement a wavelength add-drop (WAD) feature in accordance with an aspect of the invention, as will be discussed below.

Continuing with FIG. 1, optical amplifier 150 similarly amplifies the optical signals that it receives in accordance with predetermined parameters and supplies the amplified signals to optical transmission node 200 via optical link 130-i.

At node 200, optical amplifier 240 amplifies optical signals that it receives via link 130-i and supplies the amplified optical signals to port 233 of Asymmetric Wavelength Splitter (AWS) 230, which is an asymmetric wavelength combiner arranged to operate in a reverse mode. That is, AWS 230 deinterleaves the odd and even optical channels that it receives via port 233. The series of odd and even channels are outputted to ports 231 and 232, respectively. As shown, ports 231 and 232 are respectively connected to conventional optical demultiplexers 220-1 and 220-2, which may be, for example, Dragone routers operating in a demultiplexer mode.

Demultiplexer 220-1, in a conventional manner, demultiplexes the series of odd optical channels (λ₁, λ₃, λ₅, λ₇, ... etc.) that it receives at its input and outputs the demultiplexed channels, in turn, to optical receivers 210-1 through 210-n. Each such optical receiver demodulates the optical signal that it receives in a conventional manner and outputs the recovered data to an intended recipient. Demultiplexer 220-2 operates similarly with respect to the series of even optical channels (λ₂, λ₄, λ₆, λ₈, ... etc.) that it receives from port 232 as shown in FIG. 1.

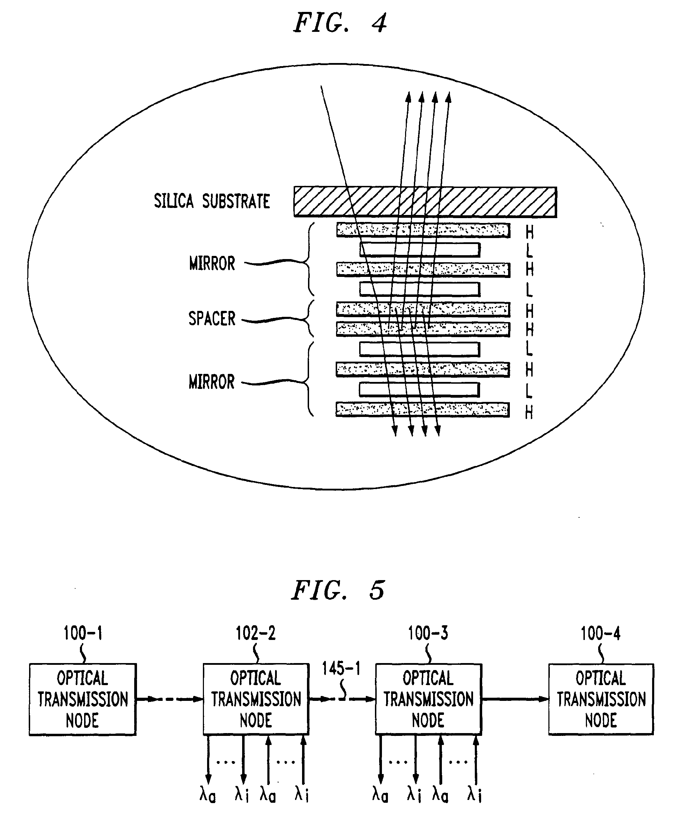

A broad block diagram of an illustrative asymmetric wavelength combiner/splitter formed from a series of cavities, reflection mirrors and transmission elements is shown in FIG. 4. Specifically, in the case of an asymmetric splitter, the reflection coefficient of each of the mirrors and cavities is set to transmit a respective odd wavelength, e.g., λ₁, and reflect the even signals. The transmitted odd signals are then collected by a collimator (not shown) and supplied to output 31. The reflected even signals are collected by a collimator (not shown) and supplied to output 32.

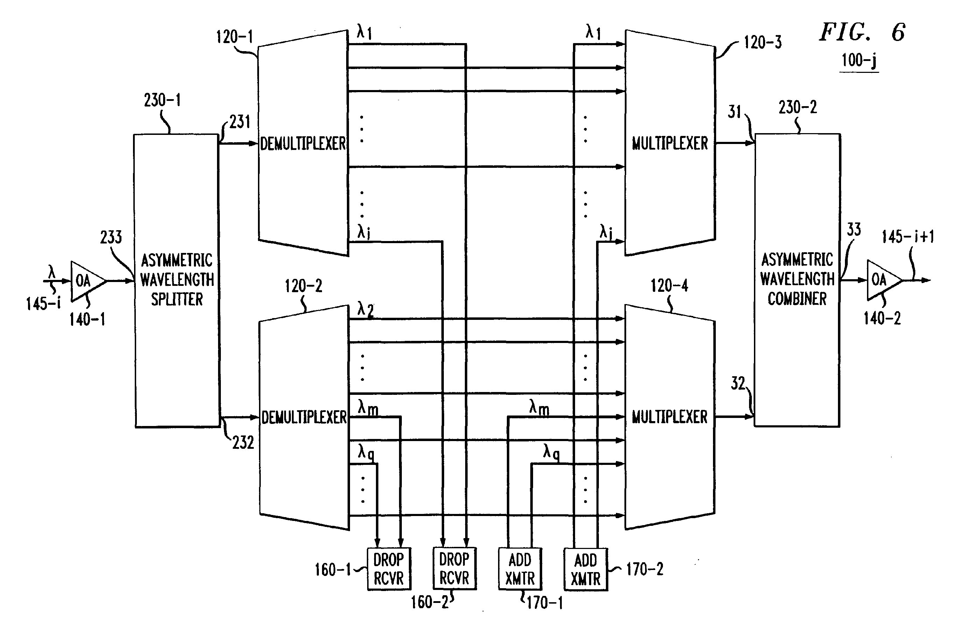

Optical transmission systems typically implement a so-called add/drop feature, in which one or more optical channels carrying particular information are "dropped" at a node and supplied to an intended destination. The add feature allows the dropped channels to be reused to carry other information and added to the outputted transmitted signal. An example of such a system is shown broadly in FIG. 5, which illustrates the adding and dropping of channels λₐ through λᵢ at node 100-2 and then again at node 100-3. Specifically, the multiplexed optical signal is demultiplexed at node 100-1 to drop the selected channels and then multiplexed with the other demultiplexed optical signals to add the optical channels λₐ through λᵢ to the optical signal stream that is outputted to optical path 145-i. The drop/add function is again performed at node 100-3, as mentioned.

Typically, such demultiplexing and multiplexing is done using so-called Bragg gratings. A Bragg grating has a somewhat square response and, therefore, is preferably used as the means for demultiplexing and multiplexing an optical signal. Disadvantageously, a Bragg grating exhibits a so-called cladding mode which narrows the bandwidth of some of the optical channels, especially the channels having the shorter wavelengths at the high-end of the transmission spectrum. The narrowing adds loss to the optical channels, and the loss may be compounded in those instances involving cascaded nodes each performing an drop/add function, as shown, for example, in FIG. 5. Consequently, prior systems only used a small, fixed number of channels at the low-end of the transmission spectrum to implement the add/drop feature in an optical transmission system.

We have recognized, however, that the response of an asymmetric wavelength splitter (e.g., FIG. 3) is comparable to that of a Bragg grating, but does not exhibit the effect of the cladding mode problem. Accordingly, then, virtually any arbitrary wavelength/channel within the transmission spectrum may be involved in an add/drop function regardless of whether the function is performed by a number of different nodes along a transmission path.

Specifically, a node arranged to drop and then add different ones of the channels, in accordance with an aspect of the invention, is shown in FIG. 6, which illustrates a broad block diagram of a node 100-j. An optical signal, λ, received via path 145-i is first amplified in a conventional manner by optical amplifier 140-1 and then supplied to port 233 of asymmetric wavelength splitter 230-1. Assuming that optical signal λ was formed in the manner discussed above in connection with FIG. 1, then, in the manner discussed above, splitter 230-1 de-interleaves the component signals forming signal λ, supplies the odd channels to port 231 connected to the input of conventional demultiplexer 120-1 and supplies the even channels to port 32 connected to the input of conventional demultiplexer 120-2. Demultiplexer 120-1 demultiplexes the signal that it receives, outputting the individual component channels, λ₁ through λᵢ, to respective output terminals. Demultiplexer 120-2 operates similarly, outputting the individual component channels, λ₂ through λ_{y} to respective output terminals. It is seen that a number, e.g., four, arbitrarily selected channels, λ₁, λᵢ, λₘ and λ_{q} are being dropped at node 100-j via drop receivers 160-1 and 160-2. The other channels outputted by demultiplexers 120-1 and 120-2 are connected directly to respective inputs of multiplexers 120-3 and 120-4 as is done conventionally. That is, those signals pass directly through node 100-j. For the sake of efficiency, the dropped channels are reused or added to the signal stream that is outputted to optical path 145-i+1. In particular, other information is added to the reused channels at respective add transmitters 170-1 and 170-2. The outputs of add transmitters 170-1 and 170-2 are connected to the appropriate input ports of multiplexers 120-3 and 120-4 so that the reused channels may be "added" to the output signal stream in correct order. In accordance with the inventive architecture, the output of multiplexer 120-3, i.e., the channels carrying the high-bit rate signals, or a combination of high-bit rate and low-bit rate signals, is supplied to port 31 of asymmetric wavelength combiner 130-2. The output of demultiplexer 120-4, i.e., the channels carrying the low-bit rate signals, is supplied to port 32 of asymmetric wavelength combiner 130-2. In the manner discussed above, combiner 130-2 interleaves the channels that it receives via port 31 with the channels that it receives via port 31. Combiner 130-2 supplies the interleaved channels to optical amplifier 140-2, which amplifies the signals that it receives at its input and outputs the amplified result to optical path 145-i+1, all in accordance with the principles of the invention.

It will thus be appreciated that, although the invention illustrated herein is described in the context of a specific illustrative embodiment, those skilled in the art will be able to devise numerous alternative arrangements which, although, not explicitly shown or described herein, nevertheless, embody the principles of the invention and are within its scope.

## Claims

1. Optical transmission apparatus comprising
first apparatus for outputting a first series of optical channels of respective wavelengths,
second apparatus for outputting a second series of optical channels of other respective wavelengths, and
asymmetric wavelength processing apparatus for receiving the first series of optical channels at an input, for receiving the second series of optical channels at another input, and for interleaving the first series of optical channels with the second series of optical channels at an output for transmission over an optical transmission path.

2. The optical transmission apparatus of claim 1 wherein
each of said first and second apparatus is a multiplexer.

3. The optical apparatus of claim 1 wherein
individual ones of the first series of optical channels each carry a respective optical signal of a first data rate and other individual ones of the first series of optical channels each carry a respective optical signal of a second data rate, and wherein each of the second series of optical channels each carry a respective optical signal of the second data rate.

4. The optical apparatus of claim 1 wherein said optical channels of said first series carry signals of different data rates and wherein the optical channels of said second series carry signals of the same data rate.

5. The optical apparatus of claim 4 wherein said same data rate is one of said different data rates.

6. The optical apparatus of claim 1 wherein said asymmetric wavelength processing apparatus is an asymmetric wavelength combiner.

7. The optical apparatus of claim 1 wherein the first series of optical channels occupy odd positions within the interleaved channels and the second series of the optical channels occupy even position with the interleaved channels.

8. The optical apparatus of claim 1 further comprising
asymmetric wavelength receiving apparatus for receiving the interleaved channels for de-interleaving the channels and outputting the first series of optical channels to a first output and outputting the second series of channels to a second output,
third apparatus for receiving the outputted first series of optical channels and demultiplexing the first series of optical channels to respective demultiplexed outputs, and
fourth apparatus for receiving the outputted second series of optical channels and demultiplexing the second series of optical channels to respective other demultiplexed outputs.

9. The optical apparatus of claim 8 further comprising
channel dropping apparatus for receiving priorly selected arbitrary ones of the demultiplexed first series of optical channels and supplying the dropped channels to respective outputs.

10. The optical apparatus of claim 8 further comprising
channel dropping apparatus for receiving priorly selected arbitrary ones of the demultiplexed first series of optical channels and priorly selected arbitrary ones of the demultiplexed second series of optical channels and supplying the selected channels to respective outputs.

11. Optical apparatus comprising
means for receiving a first plurality of data signals and modulating the data signals with respective ones of a first group of optical signals each having a respective wavelengths, said first group of optical signals each having one of a plurality of data rates,
means for receiving a second plurality of data signals and modulating the data signals with respective ones of a second group of optical signals each having the same data rate,
means for forming the first group of modulated optical signals into a first stream of modulated signals and for forming the second group of modulated signals into a second stream of modulated signals, and
combining means for receiving the first and second streams of modulated signals at respective inputs and interleaving the signals at an output for transmission over an optical transmission path.

12. The optical apparatus of claim 11 wherein said same data rate is one of said plurality of data rates.

13. The optical apparatus of claim 12 wherein said plurality of data rates includes OC48 and OC192 data rates.

14. The optical apparatus of claim 13 wherein said same data rate is the OC48 data rate.

15. Optical apparatus comprising
means for receiving from a transmission path a stream of interleaved optical channels and deinterleaving the stream of optical channels into first and second streams of optical channels,
first means for demultiplexing the first stream of optical channels to respective demultiplexed outputs, and
second means for demultiplexing the second stream of optical channels to respective other demultiplexed outputs,
channel dropping apparatus for receiving priorly selected arbitrary ones of the demultiplexed first stream of optical channels and priorly selected arbitrary one of the demultiplexed second stream of optical channels and supplying the dropped channels to respective predetermined outputs,
channel adding apparatus for receiving a number of different optical signals, for supplying individual ones of the received optical signals to first multiplexing means in place of the dropped priorly selected arbitrary ones of the demultiplexed first stream of optical channels, respectively, and supplying other individual ones of the received optical signals to second multiplexing means in place of the dropped priorly selected arbitrary ones of the demultiplexed second stream of optical channels, respectively, and
wherein said first multiplexing means is operative for multiplexing the individual ones of the received optical signals with the other ones of the demultiplexed first stream of optical channels to reform said first stream of optical channels and said second multiplexing means is operative for multiplexing the other individual ones of the received optical signals with the other ones of the demultiplexed second stream of optical channels to reform said second stream of optical channels.

16. The optical apparatus of claim 15 further comprising
combining means for receiving the reformed first and second streams of optical channels at respective first and second input inputs and for interleaving the first stream of optical channels with the second stream of optical channel and supply the interleaved channels to an output for transmission over an optical transmission path.

17. The optical apparatus of claim 16 wherein said means for deinterleaving is an asymmetric wavelength splitter.

18. The optical apparatus of claim 16 wherein said combining means is an asymmetric wavelength splitter operated in a reverse mode.

19. The optical apparatus of claim 15 wherein
individual ones of the first stream of optical channels each carry a respective optical signal of a first data rate and other individual ones of the first stream of optical channels each carry a respective optical signal of a second data rate, and wherein each of the second stream of optical channels each carry a respective optical signal of the second data rate.

20. The optical apparatus of claim 15 wherein said optical channels of said first stream carry optical signals of different data rates and wherein the optical channels of said second stream carry optical signals having the same data rate.

21. The optical apparatus of claim 20 wherein said same data rate is one of said different data rates.

22. The optical apparatus of claim 15 wherein the reformed first stream of optical channels occupy odd positions within the interleaved channels and the reformed second stream of the optical channels occupy even position with the interleaved channels.

23. Optical transmission apparatus comprising
means for outputting a first series of optical channels of respective wavelengths, in which the first series of optical channels carry optical signals having respective one of a number of different data rates,
means for outputting a second series of optical channels of other respective wavelengths, in which the second series of optical channels carry optical signals each having the same one of the different data rates, and
asymmetric wavelength processing apparatus for receiving the first series of optical channels at an input, for receiving the second series of optical channels at another input, and for interleaving the first series of optical channels with the second series of optical channels at an output for transmission over an optical transmission path.
